(19) **Europäisches Patentamt**

**European Patent Office**

**Office européen des brevets**

(11) Veröffentlichungsnummer: **0 178 734**
**B1**

(12) **EUROPÄISCHE PATENTSCHRIFT**

(45) Veröffentlichungstag der Patentschrift:
**28.12.88**

(51) Int. Cl.⁴: **H 04 N 9/72**

(21) Anmeldenummer: **85201665.8**

(22) Anmeldetag: **11.10.85**

(54) Schaltungsanordnung zum Steuern einer Bildwiedergaberöhre.

(30) Priorität: **17.10.84 DE 3437952**

(43) Veröffentlichungstag der Anmeldung:
**23.04.86 Patentblatt 86/17**

(45) Bekanntmachung des Hinweises auf die Patenterteilung:
**28.12.88 Patentblatt 88/52**

(84) Benannte Vertragsstaaten:
**DE FR GB IT**

(56) Entgegenhaltungen:
**DE-A- 2 702 817**
**US-A- 4 263 622**
**US-A- 4 319 166**

(73) Patentinhaber: **Philips Patentverwaltung GmbH,**
**Wendenstrasse 35 Postfach 10 51 49,**
**D-2000 Hamburg 1 (DE)**

(84) Benannte Vertragsstaaten: **DE**

(73) Patentinhaber: **N.V. Philips' Gloeilampenfabrieken,**
**Groenewoudseweg 1, NL-5621 BA Eindhoven (NL)**

(84) Benannte Vertragsstaaten: **FR GB IT**

(72) Erfinder: **Harlos, Hartmut, Habichtweg 18,**
**D-2000 Norderstedt 1 (DE)**

(74) Vertreter: **Hartmann, Heinrich, Dipl.-Ing. et al, Philips**
**Patentverwaltung GmbH**
**Wendenstrasse 35 Postfach 10 51 49,**
**D-2000 Hamburg 1 (DE)**

# Beschreibung

Die Erfindung bezieht sich auf eine Schaltungsanordnung zum Steuern wenigstens eines Strahlstromes in einer Bildwiedergaberöhre durch ein Bildsignal mit einer Regelschleife, die in einem Abtastintervall aus dem Wert des Strahlstromes beim Auftreten eines bestimmten Bezugspegels im Bildsignal ein Messignal gewinnt, ein daraus abgeleitetes Regelsignal bis zum folgenden Abtastintervall speichert und damit den Strahlstrom auf einen durch ein Referenzsignal vorgegebenen Wert regelt, und einer Triggerschaltung, die zur Erzeugung des Strahlstromes nach Inbetriebnahme der Bildwiedergaberöhre dienende Ifsimpulse unterdrückt und ein Umschaltsignal zum Schliessen der Regelschleife während der Abtastintervalle und zur Freigabe der Steuerung des Strahlstromes durch das Bildsignal abgibt, nachdem das Messignal einen Schwellenwert überschritten hat.

Eine derartige Schaltungsanordnung ist aus Valvo Technische Information 820705 betreffend die integrierte Farbdekoderschaltung TDA 3562 A bekannt und wird dort als sogenannte Sperrpunktregelung eingesetzt. Eine derartige Sperrpunktregelung stellt in der bekannten Schaltungsanordnung einen selbsttätigen Abgleich des sogenannten Sperrpunkts der Bildwiedergaberöhre her, d.h. sie regelt den Strahlstrom in der Bildwiedergaberöhre derart, dass dieser bei einem bestimmten Bezugspegel im Bildsignal trotz Toleranzen und zeitlichen Veränderungen (Alterungen, thermischen Veränderungen) in der Bildröhre und der Schaltungsanordnung einen konstanten Wert aufweist, der eine korrekte Bildwiedergabe gewährleistet.

Eine derartige Sperrpunktregelung ist insbesondere für den Betrieb einer Bildwiedergaberöhre zur Darstellung von Farbbildern von Vorteil, da hierbei mehrere Strahlströme für unterschiedliche Farbkomponenten des Farbbildes auftreten, die in einem festen Verhältnis zueinander stehen müssen. Ändert sich dieses Verhältnis beispielsweise durch Fertigungstoleranzen oder durch Alterungsvorgänge, treten bei der Wiedergabe des Farbbildes Verfälschungen der darzustellenden Farben auf. Die Strahlströme müssen daher sehr genau abgeglichen werden. Die genannte Sperrpunktregelung vermeidet dabei eine anderenfalls erforderliche, aufwendige Einstell- bzw. Wartungsarbeit.

Die derzeit üblichen Bildwiedergaberöhren sind als Kathodenstrahlröhren mit Glühkathoden aufgebaut, die nach ihrer Inbetriebnahme eine gewisse Zeit zum Aufheizen der Glühkathoden benötigen. Erst nach Erreichen einer endgültigen Betriebstemperatur geben diese Glühkathoden die gewünschten Strahlströme in vollem Umfang ab, während im Zeitintervall des Aufheizens der Glühkathoden allmählich ansteigende Strahlströme auftreten. Die augenblicklichen Werte dieser Strahlströme hängen von den augenblicklichen Temperaturen der Glühkathoden sowie den gleichzeitig mit dem Anheizvorgang im Aufbau befindlichen Beschleunigungsspannungen für die Bildwiedergaberöhre ab und sind bis Ende der Aufheizzeit unbestimmt. Durch sie wird nach Inbetriebnahme der Bildwiedergaberöhre zunächst ein stark verfälschtes Bild erzeugt, bis die Strahlströme ihren endgültigen Wert erreicht haben. Diese Bildverfälschungen nach Inbetriebnahme der Bildwiedergaberöhre werden noch dadurch verstärkt, dass die Sperrpunktregelung noch nicht auf die nach Beendigung der Aufheizzeit fliessenden Strahlströme eingeregelt ist.

Die bekannte Schaltungsanordnung weist zur Unterdrückung verfälschter Bilder während der Anheizzeit der Glühkathoden eine als Triggerschaltung arbeitende Einschaltverzögerung auf, die im wesentlichen eine bistabile Kippschaltung umfasst. Die Kippschaltung wird bei Inbetriebnahme der Bildwiedergaberöhre und der die in ihr fliessenden Strahlströme steuernden Schaltungsanordnungen in einem ersten Zustand geschaltet, in dem die sie die Zufuhr des Bildsignals zu der Bildwiedergaberöhre unterbricht. Damit werden während der Anheizzeit die Strahlströme unterdrückt, die Bildwiedergaberöhre zeigt noch kein Bild. In Abtastintervallen, die im Anschluss an Rückläufe der Kathodenstrahlen in eine Anfangsstellung beim Übergang von der Darstellung eines Bildes zur Darstellung eines nachfolgenden Bildes und noch innerhalb des Übergangs, also ausserhalb der Darstellung der Bilder, vorgesehen sind, wird die Bildwiedergaberöhre kurzzeitig derart gesteuert, dass bei hinreichender Erwärmung der Glühkathoden und Vorliegen einer Beschleunigunsspannung Strahlströme auftreten. Überschreiten diese einen bestimmten Schwellenwert, schaltet die Kippschaltung in einen zweiten Zustand um und gibt das Bildsignal zum Steuern der Strahlströme und der Sperrpunktregelung frei.

Es zeigt sich jedoch, dass das unmittelbar nach dem Umschalten der Kippschaltung in der Bildwiedergaberöhre dargestellte Bild noch nicht fehlerfrei ist. Da nämlich während der Aufheizzeit der Glühkathoden die Strahlströme unterdrückt werden, kann die Sperrpunktregelung noch nicht einschwingen. Dieses Einschwingen der Sperrpunktregelung erfolgt erst nach Einschalten der Kippschaltung in den zweiten Zustand und damit zu einer Zeit, in der das Bildsignal bereits die Strahlströme steuert. Damit macht sich das Einschwingen der Sperrpunktregelung im dargestellten Bild bemerkbar.

Bei der bekannten Schaltungsanordnung steigt die Bildhelligkeit während des Einschwingens der Sperrpunktregelung von Schwarz aus allmählich auf den endgültigen Wert an.

Dieses langsame Ansteigen der Bildhelligkeit nach der Inbetriebnahme wirkt nicht nur bei Schwarzweiss-Bildwiedergaberöhren mit einer Glühkathode, sondern insbesondere bei Farbbildwiedergaberöhren mit üblicherweise drei Glühkathoden in den Augen eines Betrachters störend. Bei einer Farbbildwiedergaberöhre können nämlich zusätzlich zur Veränderung der Bildhelligkeit auch Farbverfälschungen auftreten, wenn durch unterschiedlich schnelles Einschwingen der Sperrpunktregelung für die drei Strahlströme zeitweise Abweichungen von dem für eine korrekte Bildwiedergabe erforderlichen Verhältnis der Strahlströme zueinander auftreten.

Die Erfindung hat die Aufgabe, eine Schaltungsanordnung zu schaffen, die die beschriebenen Störungen in Helligkeit und Farbe des dargestellen Bildes bei der Inbetriebnahme der Bildwiedergaberöhre unterdrückt.

Die Aufgabe wird erfindungsgemäss dadurch gelöst, dass eine Schaltungsanordnung der eingangs genannten Art eine Änderungsdetektionsanordnung, die ein Änderungssignal abgibt, wenn das gespeicherte Signal einen im wesentlichen konstanten Wert angenommen hat, und ein logisches Netzwerk umfasst, das die Steuerung des Strahlstromes durch das Bildsignal ausserhalb der Abtastintervalle erst freigibt, wenn nach dem Umschaltsignal das Änderungssignal abgegeben worden ist.

Bei der erfindungsgemässen Schaltungsanordnung wird somit die Darstellung des Bildes nach Inbetriebnahme der Bildwiedergaberöhre so lange unterdrückt, bis die Sperrpunktregelung eingeschwungen ist. Wenn dann das Bildsignal den Strahlstrom zu steuern beginnt, wird sofort ein einwandfreies Bild dargestellt. Sämtliche für den Betrachter unangenehmen Störungen des Bildes sind auf diese Weise unterdrückt, die erfindungsgemässe Schaltungsanordnung ist einfach aufgebaut und lässt sich mit den bereits vorhandenen Schaltungen zur Bildsignalverarbeitung und z.B. auch mit der bekannten Schaltungsanordnung zur Sperrpunktregelung auf einem Halbleiterplättchen zusammenfassen. Eine derartige integrierte Schaltungsanordnung benötigt nicht nur wenig Platz auf dem Halbleiterplättchen, sondern kommt auch ohne zusätzlich äussere Anschlüsse aus. Damit kann die Schaltungsanordnung nach der Erfindung beispielsweise in einem integrierten Schaltkreis angeordnet werden, der an seinen äusseren Anschlüssen genau so beschaltet werden kann wie die bekannten integrierten Schaltkreise. Das bedeutet, dass ein die erfindungsgemässe Schaltungsanordnung enthaltender integrierter Schaltkreis unmittelbar in bereits vorhandene Geräte ohne zusätzliche Massnahmen eingesetzt werden kann.

In einer Weiterbildung der erfindungsgemässen Schaltungsanordnung, bei der das Bildsignal mehrere Farbsignale zum Steuern einer entsprechenden Anzahl von Strahlströmen zur Darstellung eines Farbbildes in der Bildwiedergaberöhre umfasst und die Regelschleife zu jedem Farbsignal ein Teil-Messignal oder ein daraus abgeleitetes Teil-Regelsignal speichert, umfasst die Änderungsdetektionsanordnung zu jedem Farbsignal einen Änderungsdetektor, der ein Teil-Änderungssignal abgibt, wenn das zugehörige, gespeicherte Signal einen im wesentlichen konstanten Wert angenommen hat, und gibt das logische Netzwerk die Steuerung der Strahlströme durch die Farbsignale ausserhalb der Abtastintervalle erst frei, wenn die Teil- Änderungssignale von allen Änderungsdetektoren abgegeben worden sind.

Eine derartige Schaltungsanordnung weist somit grundsätzlich drei Sperrpunktregelungen für die drei durch die einzelnen Farbsignale gesteuerten Strahlströme auf. Zur Verringerung des Schaltungsaufwandes ist dabei, wie bei der bekannten Schaltungsanordnung, die Messstufe für alle Sperrpunktregelungen gemeinsam. Alle drei Strahlströme werden dann nacheinander mit dieser Messstufe gemessen. Dabei wird zu jedem Strahlstrom ein Teil-Messignal oder ein daraus abgeleitetes Teil-Regelsignal erhalten, das gemäss seiner Zugehörigkeit zu den einzelnen Strahlströmen getrennt abgespeichert wird. Änderungen im Teil-Messignal oder Teil-Regelsignal zu je einem Strahlstrom werden von je einem der Änderungsdetektoren detektiert. Jeder dieser Änderungsdetektoren gibt ein Teil-Änderungssignal an das logische Netzwerk ab. Dieses gibt erst dann die Steuerung der Strahlströme durch das Bildsignal ausserhalb der Abtastintervalle frei, wenn sämtliche Teil-Änderungssignale ein Konstantbleiben des Teil-Messignals bzw. des Teil-Regelsignals anzeigen. Dadurch ist sichergestellt, dass die Sperrpunktregelungen für die Strahlströme aller Farbsignale eingeschwungen sind, wenn das Bild in der Bildwiedergaberöhre erscheint.

Nach einer weiteren Fortbildung der erfindungsgemässen Schaltungsanordnung mit einer Vergleichsanordnung, die das Messignal mit dem Referenzsignal vergleicht, und aus diesem Vergleich das Regelsignal ableitet, detektiert die Änderungsdetektionsanordnung eine zeitliche Änderung des Regelsignals und gibt des Änderungssignal ab, wenn das Regelsignal einen im wesentlichen konstanten Wert angenommen hat. Im Fall der Darstellung eines Farbbildes leitet die Vergleichsanordnung aus einem entsprechenden Vergleich der Teil-Messignale mit dem Referenzsignal mehrere Teil-Regelsignale ab, deren zeitliche Änderungsdetektoren detektiert werden. Bei dieser Ausgestaltung der erfindungsgemässen Schaltungsanordnung werden bevorzugt nur das Regelsignal bzw. die Teil-Regelsignale gespeichert, um damit die Strahlströme zu regeln.

Nach einer weiteren Ausgestaltung der erfindungsgemässen Schaltungsanordnung, die einen Regelsignalspeicher umfasst, der wenigstens eine Kapazität enthält, in der eine dem Regelsignal entsprechende Ladung bzw. Spannung gespeichert wird, gibt die Änderungsdetektionsanordnung das Änderungssignal ab, wenn ein bei Inbetriebnahme der Bildwiedergaberöhre auftretender Umladestrom der Kapazität einen Grenzwert unterschritten hat und somit zumindest im wesentlichen abgeklungen ist. Eine derartige Detektion des geschwungenen Zustands der Sperrpunktregelung ist unabhängig von der tatsächlichen Grösse des Regelsignals und damit unabhängig von beispielsweise der Höhe der Bildröhren-Sperrspannung, Schaltungstoleranzen oder Alterungsvorgängen in der Schaltungsanordnung oder der Bildwiedergaberöhre.

Die Detektion des Überschreitens des Grenzwertes durch den Umladestrom erfolgt vorzugsweise mit einem Stromdetektor, der mit einer Stromspiegelanordnung ausgebildet ist, die in einer Zuleitung zu einer als Regelsignalspeicher dienenden Kapazität angeordnet ist. Durch eine derartige Stromspiegelanordnung wird ein Strom geliefert, der mit dem Ladestrom der Kapazität mit grosser Genauigkeit übereinstimmt. Dieser Strom wird dann vorzugsweise in einer weiteren, von der Änderungsdetektionsanordnung umfassten Einrichtung mit einem einen Grenzwert darstellenden Strom oder nach Umwandeln in eine Spannung mit einer den Grenzwert darstellenden Spannung verglichen. Aus dem Ergebnis dieses Vergleichs wird das Änderungssignal gewonnen

Demgegenüber können als Regelsignalspeicher auch digitale Speicher insbesondere dann dienen, wenn das Bildsignal als digitales Signal zugeführt wird und die Sperrpunktregelung als digitale Regelschleife aufgebaut ist. In einem derartigen Fall sind auch die Vergleichsanordnung, die Änderungsdetektionsanordnung und die Triggerschaltung als digitale Schaltungen ausgebildet. Die Änderungsdetektionsanordnung bildet dann vorzugsweise die Differenz der im Regelsignalspeicher in zwei aufeinanderfolgenden Abtastintervallen gespeicherten Signale und vergleicht diese mit dem durch einen digitalen Wert gebildeten Grenzwert. Unterschreitet die Differenz den Grenzwert, wird das Änderungssignal abgegeben.

Ein Ausführungsbeispiel der Erfindung ist in der Zeichnung dargestellt und wird im nachfolgenden näher beschrieben. Es zeigen:

Fig. 1 ein Blockschaltbild des Ausführungsbeispiels,

Fig. 2 ein etwas detaillierteres Blockschaltbild des Ausführungsbeispiels,

Fig. 3 Zeitdiagramme einiger in der Schaltungsanordnung nach Fig. 2 auftretender Signale,

Fig. 4 ein etwas detaillierteres Blockschaltbild eines Teils der Schaltungsanordnung nach Fig. 2.

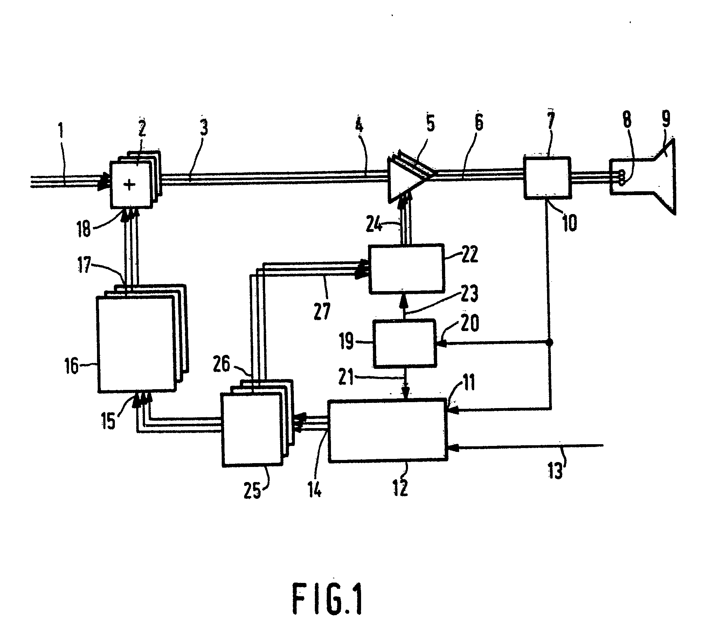

In Fig. 1 ist ein Blockschaltbild einer Schaltungsanordnung dargestellt, der über einen ersten Eingang 1 einer Verknüpfungsstufe 2 ein Bildsignal zugeleitet wird. Vom Ausgang 3 der Verknüpfungsstufe 2 wird das Bildsignal einem Bildsignaleingang 4 eines steuerbaren Verstärkers 5 zugeleitet, der am einem Ausgang 6 einen durch das Bildsignal gesteuerten Strom abgibt. Dieser wird über eine Messstufe 7 einer Glühkathode 8 in einer Bildwiedergaberöhre 9 zugeleitet und bildet darin einen Strahlstrom eines Kathodenstrahls, durch den auf einem Leuchtschirm der Bildwiedergaberöhre 9 ein durch das Bildsignal bestimmtes Bild dargestellt wird.

Die Messstufe 7 misst den der Glühkathode 8 zugeführten Strom d.h. den Strahlstrom in der Bildwiedergaberöhre 9, und gibt an einem Messsignalausgang 10 ein der Grösse dieses Stromes entsprechendes Messignal ab. Dieses wird einem Messignal 11 einer Vergleichsanordnung 12 zugeführt, der an einem Referenzsignaleingang 13 ein Referenzsignal zugeleitet wird. In einem vorzugsweise periodisch wiederkehrenden Abtastintervall beim Auftreten eines bestimmten Bezugspegels im Bildsignal bildet die Vergleichsanordnung 12 aus dem zu diesem Zeitpunkt am Messignaleingang 11 zugeführten Wert des Messignals einerseits und dem Referenzsignal andererseits durch Differenzbildung ein Regelsignal und gibt dieses an einem Regelsignalausgang 14 ab. Von dort wird das Regelsignal einem Eingang 15 eines Regelsignalspeichers 16 zugeleitet und in diesem gespeichert. Über einen Ausgang 17 des Regelsignalspeichers 16 wird das Regelsignal einem zweiten Eingang 18 der Verknüpfungsstufe 2 zugeleitet, in der es mit dem Bildsignal verknüpft, z. B. zu ihm addiert, wird.

Die Verknüpfungsstufe 2, der steuerbare Verstärker 5, die Messstufe 7, die Vergleichsanordnung 12 und der Regelsignalspeicher 16 bilden eine Regelschleife, mit der der Strahlstrom im Abtastintervall beim Auftreten des Bezugspegels im Bildsignal dem Referenzsignal nachgeführt wird. Insbesondere dient als Bezugspegel ein Schwarzwert oder ein Pegel mit geringem, festgelegtem Abstand zum Schwarzwert, d.h. ein Wert im Bildsignal, der in der Bildwiedergaberöhre im dargestellten Bild eine schwarze oder nahezu schwarze Bildfläche hervorruft. Die beschriebene Regelschleife bildet in diesem Fall eine Sperrpunktregelung für die Bildwiedergaberöhre. Hat der Bezugspegel einen Abstand zum Schwarzwert, wird die Regelschleife auch als Quasi-Sperrpunktregelung bezeichnet.

Die Schaltungsanordnung nach Fig. 1 weist weiterhin eine Triggerschaltung 19 auf, der an einem Messignaleingang 20 das Messignal vom Messignalausgang 10 der Messstufe 7 zugeleitet wird. Bei Inbetriebnahme der Schaltungsanordnung und damit der Bildwiedergaberöhre wird die Triggerschaltung 19 in einen ersten Zustand gesetzt, in dem sie über eine erste Schaltverbindung 21 die Vergleichsanordnung 12 derart sperrt, dass diese kein Regelsignal bzw. ein Regelsignal mit dem Wert null an ihrem Regelsignalausgang 14 abgibt. Dadurch wird vermieden, dass der Regelsignalspeicher 16 im Augenblick der Inbetriebnahme oder unmittelbar danach undefinierte Werte für das Regelsignal abspeichert.

Die Schaltungsanordnung nach Fig. 1 weist weiterhin ein logischen Netzwerk 22 auf, das über eine zweite Schaltverbindung 23, über die ein Umschaltsignal zugeführt wird, mit der Triggerschaltung 19 sowie über eine dritte Schaltverbindung 24 mit dem steuerbaren Verstärker 5 verbunden ist. Wie die Triggerschaltung 19 befindet sich auch das logische Netzwerk 22 bei Inbetriebnahme der Schaltungsanordnung gesteuert durch das Umschaltsignal in einem ersten Zustand, in dem es über die dritte Schalterverbindung 24 mit einem Sperrsignal den steuerbaren Verstärker 5 derart sperrt, dass in der Bildwiedergaberöhre 9 noch keine durch das Bildsignal gesteuerten Strahlströme fliessen können. Damit wird die Bildwiedergaberöhre 9 dunkler getastet, es wird noch kein Bild dargestellt.

Bei Inbetriebnahme der Bildwiedergaberöhre 9 ist die Glühkathode 8 noch kalt, so dass ohnehin kein Strahlstrom fliessen kann. Die Glühkathode 8 wird nun aufgeheizt und beginnt nach einer gewissen Zeit, allmählich Elektronen zu emittieren, wodurch sich langsam ein Kathodenstrahl und damit ein Strahlstrom ausbilden kann. Dieser wäre jedoch während des Aufheizens der Glühkathode 8, und auch weil die Sperrpunktregelung noch nicht eingeschwungen ist, unbestimmt und wird daher vom steuerbaren Verstärker 5 unterdrückt. Lediglich in Zeitintervallen, die unmittelbar im Anschluss an Rückläufe der Kathodenstrahlen in eine Anfangsstellung beim Übergang von der Darstellung eines Bildes zur Darstellung eines nachfolgenden Bildes, aber noch vor Beginn der Darstellung des nachfolgenden Bildes, vorgesehen sind, gibt der steuerbare Verstärker 5 an seinem Ausgang 6 kurzzeitig eine Spannung in Form eines Hilfsimpulses ab, durch die bei hinreichender Erwärmung der Glühkathode 8 in der Bildwiedergaberöhre 9 ein Strahlstrom hervorgerufen wird. Das Zeitintervall für die Abgabe dieser Spannung ist derart gewählt, dass ein durch sie erzeugter Kathodenstrahl in der Bildwiedergaberöhre 9 kein sichtbares Bild erzeugt, und stimmt beispielsweise mit dem Abtastintervall überein.

Die Messstufe 7 misst den auf die beschriebene Weise erzeugten, kurzzeitigen Kathodenstrom und gibt an ihrem Messignalausgang 10 ein dementsprechendes Messignal ab, das über den Messignaleingang 20 der Triggerschaltung 19 zugeleitet wird. Überschreitet das Messignal einen bestimmten, vorgebbaren Schwellenwert, wird die Triggerschaltung 19 in einen zweiten Zustand umgeschaltet, in dem sie über die erste Schaltverbindung 21 die Vergleichsanordnung 12 freigibt und über die zweite Schaltverbindung 23 mit dem Umschaltsignal auch das logische Netzwerk 22 in einen zweiten Zustand überführt. Die Vergleichsanordnung 12 wertet nun das ihr über den Messignaleingang 11 zugeführte Messignal aus, d.h. sie bildet das Regelsignal als Differenz zwischen dem Messignal und dem über den Referenzsignaleingang 13 zugeführten Referenzsignal. Das Regelsignal wird über den Regelsignalausgang 14 und den Eingang 15 in den Regelsignalspeicher 16 eingespeichert. Es wird weiterhin über den Ausgang 17 des Regelsignalspeichers 16 dem zweiten Eingang 18 der Verknüpfungsstufe 2 zugeführt und dort mit dem Bildsignal am ersten Eingang 1 verknüpft, z.B. ihm additiv überlagert. Über den Ausgang 3 der Verknüpfungsstufe 2 wird dieses überlagerte Bildsignal dem Bildsignaleingang 4 des steuerbaren Verstärkers 5 zugeführt.

Der steuerbare Verstärker 5 wird im zweiten Zustand des logischen Netzwerks 22 über die dritte Schaltverbindung 24 durch das Sperrsignal derart geschaltet, dass das Bildsignal die Strahlströme nur während der Abtastintervalle steuert und dass im übrigen noch kein Bild in der Bildwiedergaberöhre erscheint. Es beginnt jetzt das Einschwingen der Sperrpunktregelung, d.h. durch die aus Verknüpfungsstufe 2, steuerbarem Verstärker 5, Messstufe 7, Vergleichsanordnung 12 und Regelsignalspeicher 16 gebildete Regelschleife wird der Wert des Regelsignals solange verändert, bis der Strahlstrom in der Bildwiedergaberöhre 9 im Sperrpunkt oder einem dazu fest beabstandeten Pegel auf einen durch das Referenzsignal vorgegebenen Wert eingeregelt ist. Dazu ist das Abtastintervall, in dem das Bildsignal über den steuerbaren Verstärker 5 den Strahlstrom steuert, derart gewählt, das darin das Bildsignal gerade einen dem Sperrpunkt oder dem dazu fest beabstandeten Pegel entsprechenden Wert annimmt.

Während des Einschwingens der Sperrpunktregelung verändert sich das dem Regelsignalspeicher 16 zugeführte Regelsignal laufend. Zwischen dem Regelsignalausgang 14 der Vergleichsanordnung 12 und dem Eingang 15 des Regelsignalspeichers 16 ist eine Änderungsdetektionsanordnung 25 eingefügt, die die Veränderungen des Regelsignals detektiert. Wenn die Sperrpunktregelung eingeschwungen ist, d.h. das Regelsignal einen konstanten Wert angenommen hat, gibt die Änderungsdetektionsanordnung 25 an einem Ausgang 26 ein Änderungssignal ab, dass das Erreichen des eingeschwungenen Zustands der Sperrpunktregelung anzeigt und einem Änderungssignaleingang 27 des logischen Netzwerks 22 zugeleitet wird. Das logische Netzwerk 22 schaltet dann in einen dritten Zustand um, in dem es über die dritte Schaltverbindung 24 den steuerbaren Verstärker 5 freigibt derart, dass die Strahlströme nun uneingeschränkt vom Bildsignal gesteuert werden. Damit erscheint in der Bildwiedergaberöhre 9 ein korrekt dargestelltes Bild.

Durch eine schattenartige Darstellung einzelner Bestandteil der Schaltungsanordnung in Fig. 1 ist eine Abwandlung angedeutet, durch die diese Schaltungsanordnung zur Darstellung von Farbbildern in der Bildwiedergaberöhre 9 eingerichtet ist. Als Bildsignal werden dann über den Eingang 1 der Verknüpfungsstufe 2 beispielsweise drei Farbsignale zugeführt. Entsprechend ist der Eingang 1 dreifach gezeichnet, und die Verknüpfungsstufe 2 weist für jedes dieser Farbsignale ein Verknüpfungsglied, z.B. einen Addierer, auf. Der steuerbare Verstärker 5 umfasst nun drei Verstärkerstufen, je eine für jedes der Farbsignale, die Bildwiedergaberöhre 9 enthält statt einer nun drei Glühkathoden 8, so dass drei voneinander unabhängige Kathodenstrahlen für die drei Farbsignale vorhanden sind.

Zur Vereinfachung der Schaltungsanordnung und zum Einsparen von Bauelementen ist jedoch weiterhin nur eine Messstufe 7 vorgesehen, die nacheinander alle drei Strahlströme misst. Ebenso bildet die Vergleichsanordnung 12 aus nacheinander zu den einzelnen Strahlströmen eintreffenden Teil-Messignalen mit dem Referenzsignal Teil-Regelsignale, die den einzelnen Farbsignalen zugeordnet sind, und leitet diese drei Speichereinheiten weiter, die vom Regelsignalspeicher 16 umfasst werden. Von dort gelangen die Teil-Regelsignale über den zweiten Eingang 18 der Verknüpfungsstufe 2 auf die zugeordneten Verknüpfungsglieder.

Die Schaltungsanordnung bildet so drei voneinander unabhängig wirkende Regelschleifen zur Sperrpunktregelung der einzelnen Farbsignale, wobei diesen Regelschleifen lediglich die Messstufe 7 und wenigstens teilweise die Vergleichsanordnung 12 gemeinsam ist.

Die Änderungsdetektionsanordnung 25 umfasst nun drei Änderungsdetektoren, von denen jeder die zeitlichen Änderungen der zu einem Farbsignal gehörenden Teil-Regelsignale detektiert. Jeder dieser Änderungsdetektoren gibt dann über den Ausgang 26 ein Teil-Änderungssignal an den Änderungssignaleingang 27 des logischen Netzwerks 22 ab. Diese Teil- Änderungssignale treten unabhängig voneinander dann auf, wenn die zugehörige Regelschleife eingeschwungen ist. Das logische Netzwerk 22 wertet alle drei Teil-Änderungssignale aus und schaltet erst dann in seinen dritten Zustand um, wenn alle Teil- Änderungssignale einen eingeschwungenen Zustand der Regelschleifen anzeigen. Erst dann ist nämlich gewährleistet, dass alle Farbsignale von den durch sie gesteuerten Strahlströmen in der Bildwiedergaberöhre korrekt wiedergegeben werden und somit keine Verfälschungen des dargestellten Bildes, insbesondere keine Farbverfälschungen, auftreten. Das dargestellte Farbbild hat dann bei seinem Erscheinen nach Inbetriebnahme der Bildwiedergaberöhre sofort seine korrekte Helligkeit und Farbe.

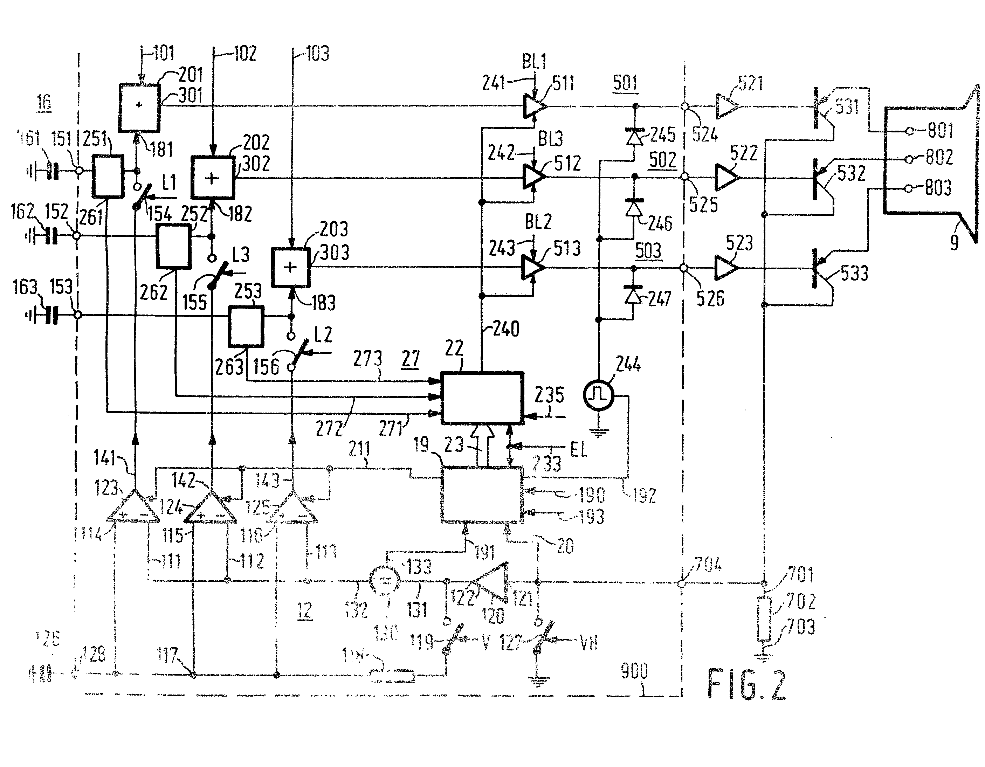

Fig. 2 zeigt ein etwas detaillierteres Blockschaltbild eines Ausführungsbeispiels einer für die Verarbeitung eines der drei Farbsignale umfassenden Bildsignals eingerichteten Schaltungsanordnung. Dieser werden drei Farbsignale für die Darstellung der Farben rot, grün und blau über drei Eingangsanschlüsse 101, 102, 103 zugeführt. Über den ersten Eingangsanschluss 101 gelangt ein Rot-Farbsignal an einen ersten Addierer 201, über den zweiten Eingangsanschluss 102 gelangt ein Grün-Farbsignal an einem zweiten Addierer 202, und über den dritten Eingangsanschluss 103 gelangt ein Blau-Farbsignal an einen dritten Addierer 203. Von Ausgängen 301, 302 bzw. 303 der Addierer 201, 202, 203 werden die Farbsignale Verstärkerstufen 501, 502 bzw. 503 zugeführt. Jede der Verstärkerstufen umfasst einen schaltbaren Verstärker 511, 512 bzw. 513, einen Endverstärker 521, 522 bzw. 523 sowie einen Messtransistor 531, 532 bzw. 533. Die Emitter dieser Messtransistoren 531, 532, 533 sind mit je einer Glühkathode 801, 802, 803 der Bildwiedergaberöhre 9 verbunden und liefern die Kathodenströme, wohingegen die Kollektoren der Messtransistoren 531, 532, 533 miteinander und mit einem ersten Anschluss 701 eines Messwiderstandes 702 verbunden sind, dessen zweiter Anschluss 703 an Masse liegt. Die Stromverstärkung der Messtransistoren 531, 532 und 533 ist so gross, dass ihre Kollektorströme nahezu mit den Kathodenströmen übereinstimmen. Durch Messung des durch die Kathodenströme am Messwiderstand 702 erzeugten Spannungsabfalls können dann die Kathodenströme und damit die Strahlströme in der Bildwiedergaberöhre 9 mit grosser Genauigkeit gemessen werden.

Die am Messwiderstand 702 abfallende Spannung wird als Messignal einem Eingang 121 eines Trennverstärkers 120 mit einem Verstärkungsfaktor von eins zugeführt, an dessen Ausgang 122 daher das unveränderte Messignal niederohmig zur Verfügung steht. Von dort wird es einem ersten Anschluss 131 einer Referenzspannungsquelle 130 zugeleitet, die mit ihrem zweiten Anschluss 132 mit invertierenden Eingängen 111, 112 bzw. 113 dreier Differenzverstärker 123, 124, 125 verbunden ist. Die Differenzverstärker 123, 124, 125 weisen weiterhin je einen nichtinvertierenden Eingang 114, 115 bzw. 116 auf. Diese sind in einem Knotenpunkt 117 miteinander, über einen Leckstrom- Speicherkondensator 126 mit Masse und über einen Entkopplungswiderstand 118 und einen Leckstrom- Abtastschalter 119 mit dem Ausgang 122 des Trennverstärkers 120 verbunden. Ausserdem ist der Eingang 121 des Trennverstärkers 120 über einen Kurzschlussschalter 127 mit Masse verbindbar.

Von Ausgängen 141, 142 bzw.143 der Differenzverstärker 123, 124 bzw. 125 werden zu den einzelnen Farbsignalen gehörende Teil-Regelsignale in Form elektrischer Spannungen (oder ggf. Umladeströme) über Regelsignal-Abtastschalter 154, 155 bzw. 156 einerseits ersten Anschlüssen 151, 152 bzw. 153 von Regelsignal-Speicherkondensatoren 161, 162, 163 zugeführt, die die Speichereinheiten des Regelsignalspeichers 16 bilden, und darin diesen Spannungen entsprechende (bzw. durch die Umladeströme gebildete) Ladungen gespeichert. Andererseits werden die Teil-Regelsignale zweiten Eingängen 181, 182 bzw. 183 des ersten, zweiten bzw. dritten Addierers 201, 202 bzw. 203 zugeführt und darin mit den Farbsignalen vom ersten, zweiten bzw. dritten Eingangsanschluss 101, 102 bzw. 103 additiv verknüpft.

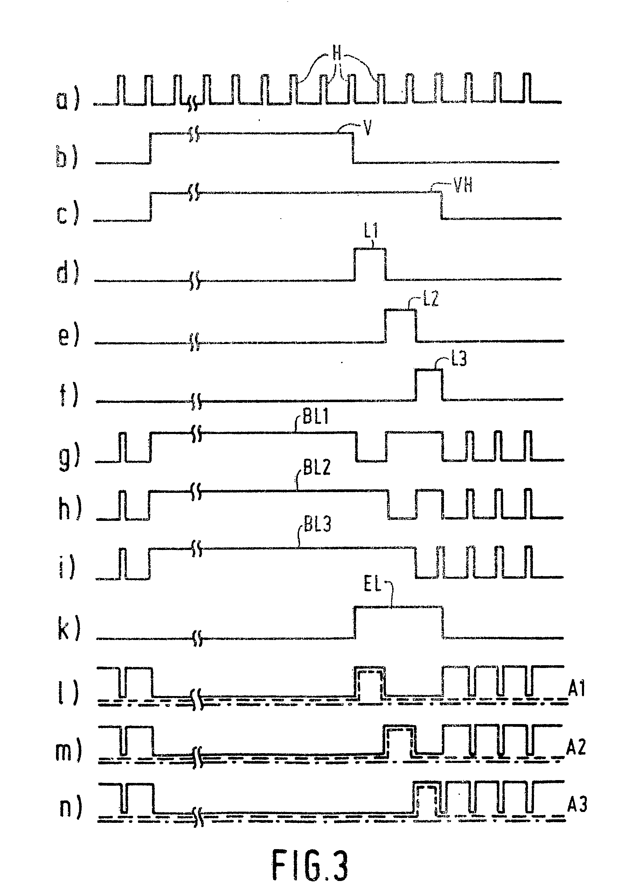

Die im wesentlichen aus dem Trennverstärker 120, der Referenzspannungsquelle 130 sowie den Differenzverstärkern 123, 124, 125 gebildete Vergleichsanordnung 12 wird nachfolgend in ihrer Funktion anhand der Impulsdiagramme in Fig. 3 erläutert. Fig. 3a zeigt ein Horizontalaustastsignal zu einem Fernsehsignal, das als Bildsignal die Strahlströme in der Bildwiedergaberöhre 9 steuert. Darin sind mit H Horizontalaustastimpulse bezeichnet, die im zeitlichen Abstand einer Zeilendauer im Bildsignal aufeinander folgen und durch die zwischen der Darstellung einzelner Bildzeilen in der Bildwiedergaberöhre die Strahlströme während des Zeilenrücklaufes abgeschaltet werden. Fig. 3b zeigt einen Vertikalaustastimpuls V, durch den beim Übergang von der Darstellung eines Bildes zur Dastellung des nachfolgenden Bildes die Strahlströme ausgeschaltet werden. Fig. 3c zeigt einen Messignal- Steuerimpuls VH, der aus einem um drei Zeilendauern verlängerten Vertikalaustastimpuls V gebildet ist.

Der Kurzschlussschalter 127 wird nun derart gesteuert, dass er nur während der Dauer des Messignal-Steuerimpulses VH nichtleitend ist und während der übrigen Zeit den Eingang 121 des Trennverstärkers 120 gegen Masse kurzschliesst. Dadurch gelangt nur während des Bildwechsels ein Messignal an die Vergleichsanordnung 12, so dass die Teile des Bildsignals, die die das Bild in der Bildwiedergaberöhre erzeugenden Strahlströme steuern, keinen Einfluss auf die Vergleichsanordnung 12 und damit auf die Sperrpunktregelung ausüben.

Während der Dauer des Messignal-Steuerimpulses VH liegt dann an den invertierenden Eingängen 111, 112, 113 der Differenzverstärker 123, 124, 125 das um einen von der Referenzspannungsquelle 130 zwischen ihrem ersten Anschluss 131 und ihrem zweiten Anschluss 132 abgegebene Referenzspannung verminderte Messignal vom Ausgang 122. Wären die Differenzverstärker 123, 124, 125 nicht vorhanden, würde diese Differenz unmittelbar als Teil-Regelsignale den Regelsignal-Speicherkondensatoren 161, 162, 163 zugeführt werden. Die Differenzverstärker 123, 124, 125 verstärken die Differenz und bilden so die Regelverstärker der Regelschleifen.

Die Vergleichsanordnung 12 enthält weiterhin eine Einrichtung zur Kompensation des Einflusses gegebenenfalls auftretender Leckströme in der Bildwiedergaberöhre 9. Dazu wird den nichtinvertierenden Eingängen 114, 115, 116 der drei Differenzverstärker 123, 124 und 125 eine Spannung zugeführt, auf die sich der Leckstrom-Speicherkondensator 126 auflädt. Diese Aufladung erfolgt durch das Messignal vom Ausgang 122 des Trennverstärkers 120 über den Entkopplungswiderstand 118 und den Leckstrom-Abtastschalter 119, der nur innerhalb der Dauer des Vertikalaustastimpulses V, gegebenenfalls nur während eines Teils desselben, geschlossen ist. In diesem Zeitraum sind nämlich die Strahlströme durch des Bildsignal völlig abgeschaltet, so dass durch den Messwiderstand 702 gegebenenfalls nur ein Leckstrom fliesst. Das Messignal entspricht also während der Dauer des Vertikalaustastimpulses V diesen Leckstrom. Da der Leckstrom auch während der übrigen Zeit fliesst, enthält das Messsignal auch ausserhalb der Zeitdauer des Vertikalaustastimpulses V einen vom Leckstrom herrührenden Anteil, der somit auch in der den invertierenden Eingängen 111, 112, 113 der Differenzverstärker 123, 124, 125 zugeführten Spannung enthalten ist und in den Differenzverstärkern 123, 124, 125 herausubtrahiert wird.

Durch den ersten Regelsignal-Abtastschalter 154 wird das Teil-Regelsignal vom Ausgang 141 des Differenzverstärkers 123 während der Dauer eines Speicherimpulses L1 dem ersten Anschluss 151 des ersten Regelsignal-Speicherkondensators 161 zugeführt und in diesem gespeichert. Entsprechend wird während der Zeitdauer eines Speicherimpulses L2 das Teil-Regelsignal vom Ausgang 143 des Differenzverstärkers 125 dem dritten Regelsignal-Speicherkondensator 163 und während eines Speicherimpulses L3 das Teil-Regelsignal vom Ausgang 142 des Differenzverstärkers 124 dem zweiten Regelsignal-Speicherkondensator 162 zugeleitet. Die Speicherimpulse L1, L2 und L3 sind in Fig. 3d, e und f dargestellt. Sie liegen jeweils nacheinander in einer der drei Zeilendauern, um die der Messignal- Steuerimpuls VH länger ist als der Vertikalaustastimpuls V. Diese drei Zeilendauern bilden das Abtastintervall für das Messignal bzw. die Teil-Messignale. Während der übrigen Zeiten sind die Ausgänge 141, 142, 143 der Differenzverstärker 123, 124, 125 von den Regelsignal-Speicherkondensatoren 161, 162, 163 abgetrennt, so dass von dort keine Störungen übertragen werden können und eine dadurch hervorgerufene Verfälschung der abgespeicherten Teil-Regelsignale ausgeschlossen wird. Während der Dauer der Speicherimpulse L1, L2 und L3 liegen die Farbsignale an den Eingangsanschlüssen 101, 102, 103 auf ihrem Bezugspegel, d.h. im vorliegenden Ausführungsbeispiel auf einem dem Sperrpunkt entsprechenden bzw. zu ihm fest beabstandeten Pegel, so dass die Regelschleifen auf diesen Pegel einschwingen können.

Die schaltbaren Verstärker 511, 512 bzw. 513 erhalten an je einem Austasteingang 241, 242, 243 je ein Austastsignal BL1, BL2, BL3 zugeführt, deren Verläufe in Fig. 3g, h, i dargestellt ist. Durch diese Austastsignale wird die Zufuhr der Farbsignale während der Zeilenrückläufe und der Bildwechsel, d.h. währen der Zeitdauer des Messignal-Steuerimpulses VH, unterbrochen und damit die Strahlströme in diesen Zeitintervallen ausgeschaltet. Allerdings wird das Rot-Farbsignal währen der ersten Zeilendauer nach Ende des Vertikalaustastimpulses V, das Blau-Farbsignal während der zweiten Zeilendauer nach dem Ende des Vertikalaustastimpulses V und das Grün-Farbsignal währen der dritten Zeilendauer nach dem Ende des Vertikalaustastimpulses V von den schaltbaren Verstärkern 511, 512, 513 durchgelassen, so dass sie die Strahlströme steuern können. In den Austastsignalen BL1, BL2 und BL3 sind in den entsprechenden Zeitintervallen Unterbrechungen im Bildwechsel-Austastimpuls, der dem Messignal-Steuerimpuls VH entspricht, vorgesehen. In diesen Zeitintervallen werden die Strahlströme gemessen und aus den Teil-Messignalen Teil-Regelsignale bestimmt, die in den Regelsignal-Speicherkondensatoren 161, 162, 163 abgespeichert werden.

Die Schaltungsanordnung nach Fig. 2 enthält ferner eine Triggerschaltung 19, der über einen Versorgungsanschluss 190 eine Versorgungsspannung zugeführt wird. Über einen Rücksetzeingang 191 wird der Triggerschaltung 19 ferner eine Spannung von einem dritten Anschluss 133 der Referenzspannungsquelle 130 zugeleitet. Diese Spannung wird bei Inbetriebnahme der Schaltungsanordnung gegenüber der Versorgungsspannung verzögert aufgebaut, so dass durch das Zusammenspiel der beiden Spannungen bei Inbetriebnahme der Schaltungsanordnung ein Einschalt-Rücksetzsignal dergestalt erzeugt wird, dass bei Inbetriebnahme am Rücksetzeingang 191 ein Spannungsimpuls mit niedrigem Wert auftritt, wodurch die Triggerschaltung 19 in ihren erster Zustand gesetzt wird. Mit dem Rücksetzeingang 191 kann auch eine beliebig ausgestaltete, andere Schaltung verbunden sein, die bei Inbetriebnahme der Bildröhre ein Einschalt-Rücksetzsignal erzeugt.

Die Triggerschaltung 19 ist weiterhin über eine zweite Schaltverbindung 23 mit einem logischen Netzwerk 22 verbunden, das bei Inbetriebnahme der Schaltungsanordnung über die zweite Schaltverbindung 23 ebenfalls in einen ersten Zustand gesetzt wird. In diesem ersten Zustand gibt der logische Netzwerk 22 einem Sperrausgang 240 ein Sperrsignal ab, das den drei schaltbaren Verstärkern 511, 512, 513 zugeführt wird. Dadurch wird die Zufuhr der Farbsignale zu den Endverstärkern 521, 522, 523 vollständig unterbrochen, so dass von diesen keine Strahlströme erzeugt werden können. Es wird somit kein Bild dargestellt.

Der Triggerschaltung 19 und dem logischen Netzwerk 22 wird weiterhin über eine Leitung 233 ein Eintastimpuls EL zugeleitet, der sich über die drei Zeilendauern erstreckt, die der Messignal-Steuerimpuls VH länger ist als der Vertikalaustastimpuls V, d.h. über das Abtastintervall. Solange sich die Triggerschaltung 19 in ihrem ersten Zustand befindet, wird dieser Eintastimpuls EL über einen Steuerausgang 192 von der Triggerschaltung 19 abgegeben und einem Impulsgenerator 244 zugeführt. Dieser erzeugt während der Zeitdauer des Eintastimpulses EL einen Spannungsimpuls bestimmter Höhe und leitet diesen über Schaltdioden 245, 246, 247 als Hilfsimpuls den Endverstärkern 521, 522, 523 zu. Dadurch werden die Strahlströme kurzzeitig eingeschaltet, um trotz der abgeschalteten Farbsignale ein Messignal zu erhalten, sobald wenigstens eine der Glühkathoden 801, 802, 803 einen Strahlstrom liefert.

Die Triggerschaltung 19 gibt ausserdem in ihrem ersten Zustand über eine Steuerleitung 211 ein Signal ab, durch das die Ausgänge 141, 142, 143 der Differenzverstärker 123, 124, 125 auf Massepotential oder nahezu auf Massepotential geschaltet werden. Damit werden Auswirkungen von Spannungen an den Eingängen 111 bis 116 der Differenzverstärker 123, 124, 125, insbesondere Auswirkungen der Referenzspannungsquelle 130, durch die gegebenenfalls fehlerhafte Aufladungen der Regelsignal-Speicherkondensatoren 161, 162, 163 ausgelöst werden können, unterdrückt

Das mit Hilfe des Impulsgenerators 244 am Eingang 121 des Trennverstärkers 120 erzeugte Messignal wird über einen Messignaleingang 20 auch der Triggerschaltung 19 zugeleitet. Überschreitet es einen vorgegebenen Schwellenwert, schaltet die Triggerschaltung 19 in ihren zweiten Zustand um. Über die zweite Schaltverbindung 23 wird dann auch das logische Netzwerk 22 in seinen zweiten Zustand umgeschaltet. Auch die Differenzverstärker 123, 124, 125 werden durch das Signal über die Steuerleitung 211 zur Abgabe eines durch die Differenz der Spannung an ihren Eingängen 111 bis 116 bestimmten Regelsignals freigegeben. Der Impulsgenerator 244 wird über den Steuerausgang 192 gesperrt. Das vom Sperrausgang 240 des logischen Netzwerks 22 abgegebene Sperrsignal schaltet jetzt die schaltbaren Verstärker 511, 512, 513 in den durch die Speicherimpulse L1, L2, L3 bestimmten Zeitintervallen derart ein, dass die Farbsignale in diesen Zeitintervallen Strahlströme zur Bildung eines Messignals hervorrufen können, durch das die Regelschleifen einschwingen. Die Darstellung des Bildes wird aber noch unterdrückt. Die Regelsignal-Speicherkondensatoren 161, 162, 163 werden dabei aufgeladen. In den Zuleitungen zu ihren ersten Anschlüssen 151, 152, 153 sind Änderungsdetektoren 251, 252, 253 angeordnet, die die Änderungen der Ladeströme der Regelsignal-Speicherkondensatoren 161, 162, 163 detektieren und die an ihren Ausgängen 261, 262, 263 jeweils ein Teil-Änderungssignal abgeben, wenn der Ladestrom des betreffenden Regelsignal-Speicherkondensators abgeklungen und damit die zugehörige Regelschleife eingeschwungen ist. Die Teil-Änderungssignale werden drei Anschlüssen 271, 272, 273 des Änderungssignaleingangs 27 des logischen Netzwerks 22 zugeführt.

Wenn von allen Änderungsdetektoren 251, 252, 253 Teil-Änderungssignale vorliegen, wenn also alle Regelschleifen eingeschwungen sind, schaltet das logischen Netzwerk 22 von seinem zweiten in seinen dritten Zustand um. Das Sperrsignal vom Sperrausgang 240 wird nun völlig abgeschaltet derart, dass die schaltbaren Verstärker 511, 512, 513 nur noch durch die Austastsignale BL1, BL2, BL3 geschaltet werden. Die Farbsignale werden dann zu den Endverstärkern 521, 522, 523 durchgeschaltet und das Bild in der Bildwiedergaberöhre dargestellt.

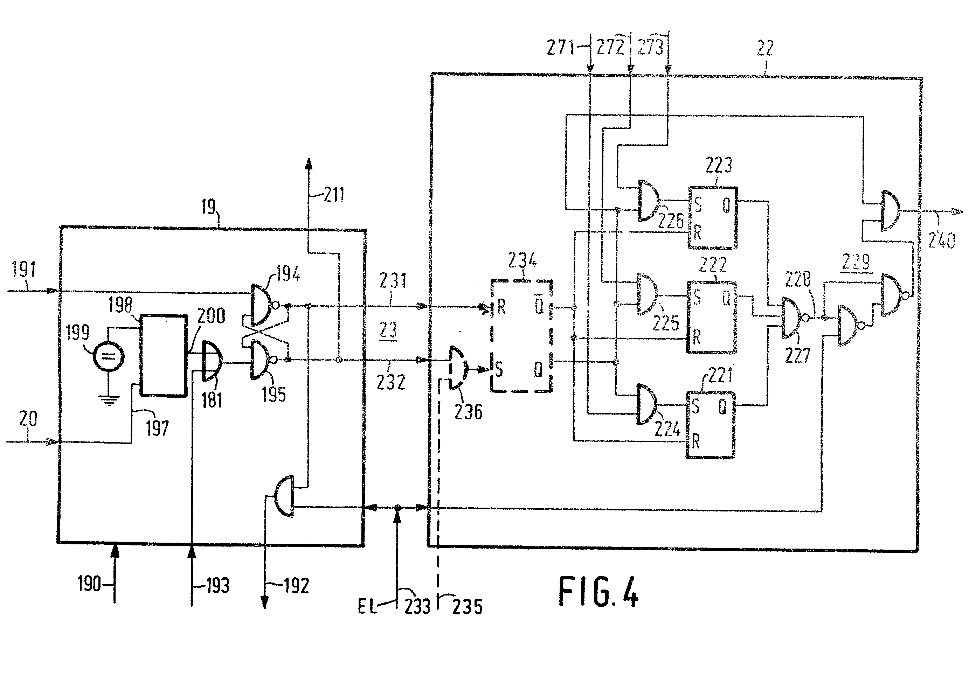

Fig. 4 zeigt ein Ausführungsbeispiel für eine Triggerschaltung 19 und ein logisches Netzwerk 22 der Schaltungsanordnungen nach den Fig. 1 oder 2. Die Triggerschaltung 19 enthält eine aus zwei NAND- Gattern 194, 195 gebildete Kippschaltung, der über den Rücksetzeingang 191 das Einschalt-Rücksetzsignal zugeführt wird, durch das die Triggerschaltung 19 in ihren ersten Zustand zurückgesetzt wird. Alle Elemente der Schaltungsanordnung in Fig. 4 sind in positiver Logik dargestellt. Somit wird durch eine kurzzeitige niedrige Spannung am Rücksetzeingang 191 unmittelbar nach Inbetriebnahme der Schaltungsanordnung die Kippschaltung 194, 195 derart gesetzt, dass am Ausgang des ersten NAND-Gatters 195 eine niedrige Spannung auftritt. Durch die niedrige Spannung am Ausgang des zweiten NAND-Gatters 195 werden die Differenzverstärker 123, 124, 125 über die Steuerleitung 211 in der beschriebenen Weise gesperrt.

Über die Leitung 233 wird der Triggerschaltung 19 der Eintastimpuls EL zugeführt, über ein UND-Gatter 196 mit dem Signal vom Ausgang des ersten NAND- Gatters 194 verknüpft und am Steuerausgang 192 zum Steuern des Impulsgenerators 244 abgegeben.

Die Signale von den Ausgängen der NAND-Gatter 194, 195 werden über eine erste Leitung 231 und eine zweite Leitung 232 der zweiten Schaltverbindung 23 als Umschaltsignal dem logischen Netzwerk 22 zugeführt. Die erste Leitung 231 ist mit Rücksetzeingängen R dreier als bistabile Kippschalter ausgebildeter Teil- Änderungssignal-Speicher 221, 222, 223 verbunden, die bei Inbetriebnahme der Schaltungsanordnung über die erste Leitung 231 zurückgesetzt werden derart, dass sie an ihren Ausgängen Q eine niedrige Spannung führen. Die zweite Leitung 232 der zweiten Schaltverbindung 23 ist über drei UND-Gatter 224, 225, 226 an Setzeingänge S der drei Teil-Änderungssignal-Speicher 221, 222, 223 geführt. Über UND-Gatter 224, 225, 226 wird das Signal auf der zweiten Leitung 232 der zweiten Schaltverbindung 23 mit je einem der über die Anschlüsse 271, 272, 273 zugeführten Teil- Änderungssignale verknüpft. Die Signale von den Ausgängen Q der Teil-Änderungssignal-Speicher 221, 222, 223 werden über ein als NAND-Gatter ausgebildetes Sammelgatter 227 verknüpft und an dessen Ausgang 228 bereitgestellt.

Der Triggerschaltung 19 wird über den Messignaleingang 20 das Messignal zugeführt und einem ersten Eingang 197 eines Schwellenwertdetektors 198 zugeleitet, dem ferner an einem zweiten Eingang ein von einem Schwellenwertgenerator 199 erzeugter Schwellenwert, beispielsweise als Schwellenspannung, zugeführt wird. Wenn die Spannung am ersten Eingang 197 des Schwellenwertdetektors 198 kleiner ist als die vom Schwellenwertgenerator 199 abgegebene Spannung, gibt der Schwellenwertdetektor 198 an seinem Ausgang 200 eine hohe Spannung ab. Übersteigt dagegen die Spannung am ersten Eingang 197 die Spannung des Schwellenwertgenerators 199, springt die Spannung am Ausgang 200 auf einen niedrigen Wert. Diese Spannung wird als Setzsignal der Kippschaltung 194, 195 zugeführt, schaltet diese um und setzt dadurch die Triggerschaltung 19 in ihren zweiten Zustand, wenn die Spannung am ersten Eingang 197 die Spannung des Schwellenwertgenerators 199 übersteigt.

In der Schaltungsanordnung nach Fig. 4 ist zwischen dem Ausgang 200 und der Kippschaltung 194, 195 ein als ODER-Gatter ausgebildetes Abfragegatter 181 eingefügt, dem über einen Abfrageeingang 193 der Triggerschaltung 19 ein Abfrageimpuls zugeleitet wird. Dadurch wird sichergestellt, dass das Umschalten der Kippschaltung 194, 195 nur zu einer durch den Abfrageimpuls – im vorliegenden Fall ein negativer Spannungsimpuls – festgelegten Zeit und nicht etwa durch Störungen zu anderen Zeiten erfolgen kann. Als ein solcher Abfrageimpuls kann beispielsweise ein Impuls dienen, der in der zweiten Zeilendauer nach dem Ende des Vertikalaustastimpulses V auftritt, d.h. im wesentlichen dem Speicherimpuls L2 entspricht.

Nach dem Umschalten der Kippschaltung 194, 195 entsprechend dem Setzen der Triggerschaltung 19 in den zweiten Zustand werden über die Steuerleitung 211 und den Ausgang 192 entsprechend veränderte Signale zum Steuern des Impulsgenerators 244 und der Differenzverstärker 123, 124, 125 abgegeben. Auch auf den Leitungen 231, 232 der zweiten Schaltverbindung 23 erscheinen veränderte Spannungen, durch die Teil-Änderungssignal-Speicher 221, 222, 223 freigegeben werden derart, dass sie beim Eintreffen der Teil-Änderungssignale an den Anschlüssen 271, 272, 273 jeweils gesetzt werden können.

Gegebenenfalls ist in die Leitungen 231, 232 zur Verzögerung der über sie geleiteten Signale eine weitere Kippschaltung 234 eingefügt, die bei Inbetriebnahme der Schaltungsanordnung über die erste Leitung 231 zurückgesetzt wird und damit auch die Teil- Änderungssignal-Speicher 221, 222, 223 zurückgesetzt. Nach dem Umschalten der Triggerschaltung 19 in den zweiten Zustand wird die weitere Kippschaltung 234 über die zweite Leitung 232 der zweiten Schaltverbindung 23 jedoch erst gesetzt, wenn über einen Freigabeeingang 235 und ein weiteres UND-Gatter 236 ein Freigabeimpuls eintrifft, beispielsweise um eine Zeitdauer von ungefähr dem Abstand zweier Vertikalaustastimpulse V nach dem Umschalten der Triggerschaltung 19 in den zweiten Zustand. Damit kann z.B. ein Zeitraum überbrückt werden, in dem an den Anschlüssen 271, 272, 273 keine definierten Signalwerte anliegen.

Das Signal am Ausgang 228 des Sammelgatters 227 wechselt seinen Zustand, wenn auch das letzte der drei Teil-Änderungssignale eingetroffen ist und den letzten der Teil-Änderungssignal-Speicher gesetzt hat. Es wird dann über eine Gatteranordnung 229 aus zwei NAND-Gattern sowie einem UND-Gatter mit dem Eintastimpuls EL von der Leitung 233 und dem Signal auf der zweiten Leitung 232 der zweiten Schaltverbindung 23 bzw. vom Ausgang Q der weiteren Kippschaltung 234 zu dem am Sperrausgang 240 abgegebenen Sperrsignal verknüpft, das den schaltbaren Verstärkern 511, 512, 513 zugeleitet wird.

Fig 3l, m, n zeigen die Kombinationen des Sperrsignals mit den Austastsignalen BL1, BL2, BL3 an den Austasteingängen 241, 242, 243 der schaltbaren Verstärker 511, 512, 513 in der Art logischer UND-Verknüpfungen. Die strichpunktiert gezeichneten Linien zeigen durch diese Verknüpfungen gebildete resultierende Eintastsignale A1, A2, A3 nach Inbetriebnahme der Schaltungsanordnung und vor Auftreten eines Strahlstromes, also im ersten Zustand des logischen Netzwerks 22. Hier sind die resultierenden Eintastsignale A1, A2, A3 konstant auf niedrigem Pegel. Die gestrichelten Kurven zeigen die resultierenden Eintastsignale A1, A2, A3 nach Auftreten eines Strahlstromes und vor Erreichen des eingeschwungenen Zustandes der Sperrpunktregelung, d.h. im zweiten Zustand des logischen Netzwerks 22, während die ausgezogenen Kurven die resultierenden Eintastsignale A1, A2, A3 im dritten Zustand des logischen Netzwerks 22, darstellen. Die gestrichelt gezeichneten Kurven entsprechen in ihren Verläufen den Speicherimpulsen L1, L2, L3, währen die ausgezogenen Kurven in ihren Verläufen den Inversen der Austastsignale BL1, BL2, BL3 entsprechen. Dabei bedeutet ein hoher Pegel des resultierenden Eintastsignals A1, A2 bzw. A3, dass der schaltbare Verstärker 511, 512 bzw. 523 zuleitet, während ein niedriger Pegel im resultierenden Eintastsignal A1, A2 bzw. A3 bedeutet, dass der zugehörige schaltbare Verstärker 511, 512 bzw. 513 für das Farbsignal gesperrt ist.

Die beschriebene Schaltungsanordnung ist derart ausgebildet, dass die Triggerschaltung 19 in ihrem zweiten und das logischen Netzwerk 22 in seinem dritten Zustand verbleiben, auch wenn durch Störungen während des Betriebes der Schaltungsanordnung erneut Ladeströme an den Differenzsignal-Speicherkondensatoren 161, 162, 163 auftreten. Die Sperrpunktregelung regelt dann nach, ohne dass Störungen des dargestellten Bildes auftreten.

Bei der in Fig. 2 dargestellten Schaltungsanordnung kann auch das Grün-Farbsignal währen der zweiten Zeilendauer nach dem Ende des Vertikalaustastimpulses V und das Blau-Farbsignal während der dritten Zeilendauer nach dem Ende des Vertikalaustastimpulses V von den schaltbaren Verstärkern 511, 512, 513 zum Steuern der Strahlströme durchgelassen werden. An den Regelsignal-Abtastschaltern 155 und 156 sind dann die Speicherimpulse L2 und L3 und an den Austasteingängen 242 und 243 das zweite und dritte Austastsignal BL2 und BL3 zu vertauschen. Entsprechend vertauschen sich dann auch die resultierenden Eintastsignale A2 und A3 nach Fig. 3m und n.

In Fig. 2 ist durch eine gestrichelte Linie 900 angedeutet, welche Bauteile der Schaltungsanordnung vorteilhaft zu einem integrierten Schaltkreis zusammengefasst werden können. Die ersten Anschlüsse 151, 152, 153 der Differenzsignal-Speicherkondensatoren 161, 162, 163, ein Anschluss 128 des Leckstrom-Speicherkondensators 126, drei Anschlüsse 524, 525, 526 in den Zuleitungen zu den Endverstärkern 521, 522, 523 sowie eine Leitungsverbindung 704 zwischen dem ersten Anschluss 701 des Messwiderstandes 702 und dem Eingang 121 des Trennverstärkers 120 sind dann als Anschlusskontakte dieses integrierten Schaltkreises ausgebildet.

**Patentansprüche**

1. Schaltungsanordnung zum Steuern wenigstens eines Strahlstromes in einer Bildwiedergaberöhre (9) durch ein Bildsignal
— mit einer Regelschleife (2, 5, 7, 12, 16), die in einem Abtastintervall aus dem Wert des Strahlstromes beim Auftreten eines bestimmten Bezugspegels im Bildsignal ein Messignal gewinnt, ein daraus abgeleitetes Regelsignal bis zum folgenden Abtastintervall speichert und damit den Strahlstrom auf einen durch ein Referenzsignal vorgegebenen Wert regelt,
— und einer Triggerschaltung (19), die zur Erzeugung des Strahlstromes nach Inbetriebnahme der Bildwiedergaberöhre (9) dienende Hilfsimpulse unterdrückt und ein Umschaltsignal zum Schliessen der Regelschleife (2, 5, 7, 12, 16) während der Abtastintervalle und zur Freigabe der Steuerung des Strahlstromes durch das Bildsignal abgibt, nachdem das Messignal den Schwellenwert überschritten hat, gekennzeichnet durch
— eine Änderungsdetektionsanordnung (25), die ein Änderungssignal abgibt, wenn das gespeicherte Signal einen im wesentlichen konstanten Wert angenommen hat,
— und ein logisches Netzwerk (22), das die Steuerung des Strahlstromes durch das Bildsignal ausserhalb der Abtastintervalle erst frei gibt, wenn nach dem Umschaltsignal auch das Änderungssignal abgegeben worden ist.

2. Schaltungsanordnung nach Anspruch 1, bei der das Bildsignal mehrere Farbsignale zum Steuern einer entsprechenden Anzahl von Strahlströmen zur Darstellung eines Farbbildes in der Bildwiedergaberöhre (9) umfasst und die Regelschleife (2, 5, 7, 12, 16) zu jedem Farbsignal ein Teil-Messignal oder ein daraus abgeleitetes Teil-Regelsignal speichert, dadurch gekennzeichnet, dass die Änderungsdetektionsanordnung (25) zu jedem Farbsignal einen Änderungsdetektor (251, 252, 253) umfasst, der ein Teil-Änderungssignal abgibt, wenn das zugehörige gespeicherte Signal einen im wesentlichen konstanten Wert angenommen hat, und dass das logische Netzwerk (22) die Steuerung der Strahlströme durch die Farbsignale ausserhalb der Abtastintervalle erst frei gibt, wenn die Teil-Änderungssignale von allen Änderungsdetektoren (251, 252, 253) abgegeben worden sind.

3. Schaltungsanordnung nach Anspruch 1 oder 2, mit einer Vergleichsanordnung (12), die das Messignal mit dem Referenzsignal vergleicht und aus diesem Vergleich das Regelsignal ableitet, dadurch gekennzeichnet, dass die Änderungsdetektionsanordnung (25; 251, 252, 253) eine zeitliche Änderung des Regelsignals detektiert und das Änderungssignal abgibt, wenn das Regelsignal einen im wesentlichen konstanten Wert angenommen hat.

4. Schaltungsanordnung nach Anspruch 1, 2 oder 3 mit einem Regelsignalspeicher (16; 161, 162, 163), der wenigstens eine Kapazität enthält, dadurch gekennzeichnet, dass die Änderungsdetektionsanordnung (25; 251, 252, 253) das Änderungssignal abgibt, wenn ein bei Inbetriebnahme der Bildwiedergaberöhre (9) auftretender Umladestrom der Kapazität einen Grenzwert unterschritten hat.

**Revendications**

1. Montage de circuit pour commander au moins un courant de faisceau dans un tube image (9) par un signal d'image, comportant: — une boucle de régulation (2, 5, 7, 12, 16) qui, dans un intervalle d'échantillonnage, obtient un signal de mesure à partir de la valeur du courant de faisceau lors de l'apparition d'un niveau de référence déterminé dans le signal d'image, stocke un signal de réglage qui en est dérivé, jusqu'à l'intervalle d'échantillonnage suivant, et règle au moyen de celui-ci le courant de faisceau sur une valeur prédéfinie par un signal de référence,

– et un circuit de déclenchement (19) qui supprime les impulsions auxiliaires servant à produire le courant de faisceau après la mise en fonctionnement du tube image (9) et fournit un signal de commutation pour fermer la boucle de régulation (2, 5, 7, 12, 16) pendant les intervalles d'échantillonnage et pour libérer la commande du courant de faisceau par le signal d'image, après que le signal de mesure a dépassé une valeur de seuil, caractérisé par

– un dispositif de détection de variation (25) qui fournit un signal de variation lorsque le signal stocké a adopté une valeur en substance constante,

– et un réseau logique (22) qui ne libère la commande du courant de faisceau par le signal d'image en dehors des intervalles d'échantillonnage que lorsque, après le signal de commutation, le signal de variation a également été fourni.

2. Montage de circuit suivant la revendication 1, dans lequel le signal d'image comprend plusieurs signaux couleur pour commander un nombre correspondant de courants de faisceau en vue de la visualisation d'une image couleur dans le tube image (9), et la boucle de régulation (2, 5, 7, 12, 16) stocke, pour chaque signal couleur, un signal de mesure partiel ou un signal de régulation partiel qui en est dérivé, caractérisé en ce que le dispositif de détection de variation (25) comprend, pour chaque signal couleur, un détecteur de variation (251, 252, 253) qui produit un signal de variation partiel quand le signal stocké associé a adopté une valeur en substance constante et que le réseau logique (22) ne libère la commande des courants de faisceau par les signaux couleur en dehors des intervalles d'échantillonnage que lorsque les signaux de variation partiels ont été fournis par tous les détecteurs de variation (251, 252, 253).

3. Montage de circuit suivant la revendication 1 ou 2, comportant un dispositif comparateur (12) qui compare le signal de mesure au signal de référence et dérive le signal de régulation de cette comparaison, caractérisé en ce que le dispositif de détection de variation (25; 251, 252, 253) détecte une variation temporaire du signal de régulation et fournit le signal de variation lorsque le signal de régulation a adopté une valeur en substance constante.

4. Montage de circuit suivant la revendication 1, 2 ou 3, comprenant une mémoire de signal de régulation (16; 161, 162, 163) contenant au moins une capacité, caractérisé en ce que le dispositif de détection de variation (25; 251, 252, 253) fournit le signal de variation lorsqu'un courant d'inversion de charge de la capacité apparaissant lors de la mise en fonctionnement du tube image (9) a dépassé par défaut une valeur limite.

**Claims**

1. A circuit arrangement for the control of at least one beam current in a picture tube (9) by a picture signal – with a control loop (2, 5, 7, 12, 16) wich in one sampling interval obtains a measuring signal from the value of the beam current at the occurrence of a given reference level in the picture signal, stores a control signal derived therefrom until the next sampling interval and thereby adjusts the beam current to a value preset by a reference signal,

– and an trigger circuit (19) which suppresses auxiliary pulses used to generate the beam current after the picture tube (9) has been switched on and issues a switching signal for the purpose of closing the control loop (2, 5, 7, 12, 16) during the sampling intervals and for enabling the control of the beam current by the picture signal after the measuring signal has exceeded the threshold value, characterized by

– a change detection arrangement (25) which supplies a change signal when the stored signal has assumed an essentially constant value,

– and a logic network (22) which does not enable the control of the beam current by the picture signal outside the sampling intervals until the change signal has also been supplied after the switching signal.

2. A circuit arrangement as claimed in Claim 1, on which the picture signal contains several colour signals for the control of a corresponding number of beam currents for the display of a colour picture in the picture tube (9) and the control loop (2, 5, 7, 12, 16) stores a submeasuring signal or a sub-control signal derived therefrom for each colour signal, characterized in that the change detection arrangement (25) includes a change detector (251, 252, 253) for each colour signal which delivers a sub-change signal when the relevant stored signal has assumed an essentially constant value, and the logic network (22) does not enable the control of the beam currents by the colour signals outside the sampling intervals until the sub-change signals have been supplied by all the change detectors (251, 252, 253).

3. A circuit arrangement as claimed in Claims 1 or 2, with a comparator arrangement (12) which compares the measuring signal with the reference singal and derives the control signal from this comparison, characterized in that the change detection arrangement (25; 251, 252, 253) detects a change in the control signal with respect to time and issues the change signal when the cotrol signal has assumed an essentially constant value.

4. A circuit arrangement as claimed in Claims 1, 2 or 3, with a control signal store (16; 161, 162, 163) which contains at least one capacitor, characterized in that the change detection arrangement (25; 251, 252, 253) produces the change signal when a charge-reversing current of the capacitor occurring during the switched on position of the picture tube (9) falls below a limit value.

1/4

FIG.1

FIG. 2

15

FIG.3

4/4

FIG.4